# EUROPÄISCHE PATENTSCHRIFT

(11) **EP 2 822 150 B1**
(45) Veröffentlichungstag und Bekanntmachung des Hinweises auf die Patenterteilung: **23.10.2019**
(21) Anmeldenummer: 14164900.4
(22) Anmeldetag: 16.04.2014
(51) Int. Cl.: H02K 21/14, H02K 7/108, H02K 21/24

(54) **Elektrische Maschine mit integrierter Kupplung**
Electric machine with integrated coupling
Machine électrique dotée d'un couplage intégré

(30) Priorität: 02.07.2013 DE 102013212912; 15.04.2014 DE 102014207189
(43) Veröffentlichungstag der Anmeldung: 07.01.2015
(73) Patentinhaber: ROBERT BOSCH GMBH, 70442 Stuttgart (DE)
(72) Erfinder: Keller, Stefan, 71735 Eberdingen (DE); Braun, Martin, 72149 Neustetten-Wolfenhausen (DE)

(56) Entgegenhaltungen:
- WO-A1-2009/126025
- DE-B3-102006 036 707
- US-A1- 2011 175 473

## Beschreibung

### Technisches Gebiet

Die vorliegende Erfindung betrifft elektrische Maschinen für Antriebseinheiten von Kraftfahrzeugen, insbesondere Transversal- oder Axialflussmaschinen mit Scheibenrotoren.

### Stand der Technik

Als Transversalflussmaschinen ausgebildete elektrische Maschinen zeichnen sich durch eine hohe Leistungsdichte bei einem vergleichsweise geringen Gewicht aus. Beispielsweise ist aus der Druckschrift WO 2009/115247 A1 eine Transversalflussmaschine mit einem Scheibenrotor bekannt. In eine Rotorscheibe des Scheibenrotors sind in konstantem Abstand von einer Drehachse Permanentmagnete eingebettet, die in Umfangsrichtung magnetisiert sind. Benachbarte Permanentmagnete sind zueinander entgegengesetzt magnetisiert, so dass die einander zugewandten Pole zweier benachbarter Permanentmagnete jeweils gleichartig sind. Die Feldlinien zwischen diesen gleichartigen Polen werden damit so überlagert, dass ein sich in axialer und radialer Richtung von dem Polzwischenraum ausbreitendes Rotormagnetfeld erzeugt wird.

Der Scheibenrotor ist axial zwischen zwei Statoreinheiten angeordnet, die jeweils eine konzentrisch um eine Motorachse verlaufende Statorwicklung aufweisen. Zu jeder der Statorwicklungen radial nach innen und außen versetzt weist jede der Statoreinheiten sich in Umfangsrichtung erstreckende und in Richtung des Scheibenrotors hervorstehende innere und äußere Statorzähne auf.

Bei der Bestromung der Statorwicklung einer Statoreinheit wirkt auf die Magnetpole des Scheibenrotors in Richtung des in Umfangsrichtung am nächsten gelegenen Magnetpols der Statoreinheiten mit entgegengesetzter Magnetisierung eine Kraft, wodurch ein von der Rotorposition sowie vom Betrag und Vorzeichen des Statorstroms abhängiges Drehmoment erzeugt werden kann. Antriebssysteme für Hybridfahrzeuge mit einem Verbrennungsmotor und einer elektrischen Maschine benötigen in der Regel eine zusätzliche Kupplung zur Abkopplung des Verbrennungsmotors vom restlichen Abtriebsstrang. Diese zusätzliche Kupplung wird in bekannter Weise zwischen dem Verbrennungsmotor und der elektrischen Maschine vorgesehen. Das Vorsehen der zusätzlichen Kupplung erfordert einen erheblichen zusätzlichen Einbauraum, der die Größe des gesamten Antriebssystems wesentlich vergrößert.

Aus der US 2011/0175473 A1 ist eine Antriebseinheit für ein Hybridantriebssystem bekannt, die eine elektrische Maschine mit einem Stator und einem Rotor und eine Kupplungsaktorik umfasst, wobei der Rotor der elektrischen Maschine eine Kupplungsscheibe aufweist.

Aus der WO 2009/126025 A1 ist eine elektrische Maschine mit zwei Scheibenläufern bekannt. An einem der beiden Scheibenläufer ist ein Kupplungsbelag vorgesehen, der mit einer gegenüberliegenden Kupplungsscheibe zusammenwirkt.

Es ist Aufgabe der vorliegenden Erfindung, eine Antriebseinheit zur Verfügung zu stellen, die in einer besonders kompakten, platzsparenden Bauweise mit einer Kupplung gekoppelt ist.

### Offenbarung der Erfindung

Diese Aufgabe wird erfindungsgemäß durch die Antriebseinheit für ein Hybridantriebssystem gemäß Anspruch 1 sowie durch das Hybridantriebssystem gemäß dem nebengeordneten Anspruch 7 gelöst.

Weitere vorteilhafte Ausgestaltungen der vorliegenden Erfindung sind in den abhängigen Ansprüchen angegeben.

Gemäß einem ersten Aspekt ist eine Antriebseinheit für ein Hybridantriebssystem vorgesehen, umfassend:
- eine Transversal- oder Axialflussmaschine als elektrische Maschine, mit einer Statoreinheit und einem Scheibenrotor;
- beidseitig konzentrisch an dem Scheibenrotor angeordnete ringförmige Kupplungsbeläge;
- den Kupplungsbelägen gegenüberliegende Kupplungsscheiben, die im Inneren der Statoreinheit angeordnet sind; und
- eine Kupplungsaktorik, um die eine oder die beiden Kupplungsscheiben in Richtung der zugehörigen Kupplungsbeläge zu bewegen.

Eine Idee der obigen Antriebseinheit besteht darin, eine elektrische Maschine mit einer integrierten Kupplung vorzusehen. Die Kupplung kann dann dazu dienen, einen Verbrennungsmotor an die elektrische Maschine anzukoppeln. Der Scheibenrotor wird in dessen Inneren mit Kupplungsbelägen versehen, so dass der Scheibenrotor direkt als Kupplungsscheibe dient. Auf diese Weise kann eine elektrische Maschine mit einer integrierten Kupplung zur Verfügung gestellt werden, die gegenüber dem separaten Aufbau einer elektrischen Maschine und einer Kupplung eine erheblich verringerte Baugröße aufweist.

Weiterhin kann der Scheibenrotor fest mit einer Abtriebswelle gekoppelt sein, die als Hohlwelle ausgeführt ist.

Insbesondere können der eine oder die beiden Kupplungsbeläge auf den Scheibenrotor aufgebracht oder in integrierter Weise mit diesem ausgebildet sein.

Es kann vorgesehen sein, dass mindestens eine der Kupplungsscheiben mit einer Antriebswelle gekoppelt ist.

Gemäß einer Ausführungsform kann der Scheibenrotor bezüglich der Antriebswelle drehbeweglich angeordnet sein.

Weiterhin kann der Scheibenrotor drehbeweglich gelagert sein, wobei die Lager radial außerhalb der einen oder der beiden Kupplungsscheiben angeordnet sind.

Gemäß einem weiteren Aspekt ist ein Hybridantriebssystem, insbesondere ein P2-Hybridantriebssystem, vorgesehen, umfassend einen Verbrennungsmotor und die obige Antriebseinheit, wobei der Verbrennungsmotor zum Übertragen eines Drehmoments mit einer der Kupplungsscheiben gekoppelt ist.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figuren 1a und b: verschiedene Querschnittsdarstellungen einer Transversalflussmaschine;
- Figur 2: eine schematische Darstellung eines Hybridantriebssystems zum Antreiben eines Kraftfahrzeugs;
- Figur 3: eine Längsschnittdarstellung einer Antriebseinheit mit einer erfindungsgemäßen Transversalflussmaschine und einer integrierten Kupplung;
- Figur 4: eine Draufsicht auf eine Antriebseinheit mit einer Transversalflussmaschine und einer integrierten Kupplung; und
- Figur 5: eine Längsschnittdarstellung einer Antriebseinheit mit einer nicht erfindungsgemäßen Transversalflussmaschine und einer damit gekoppelten Kupplung.

### Beschreibung von Ausführungsformen

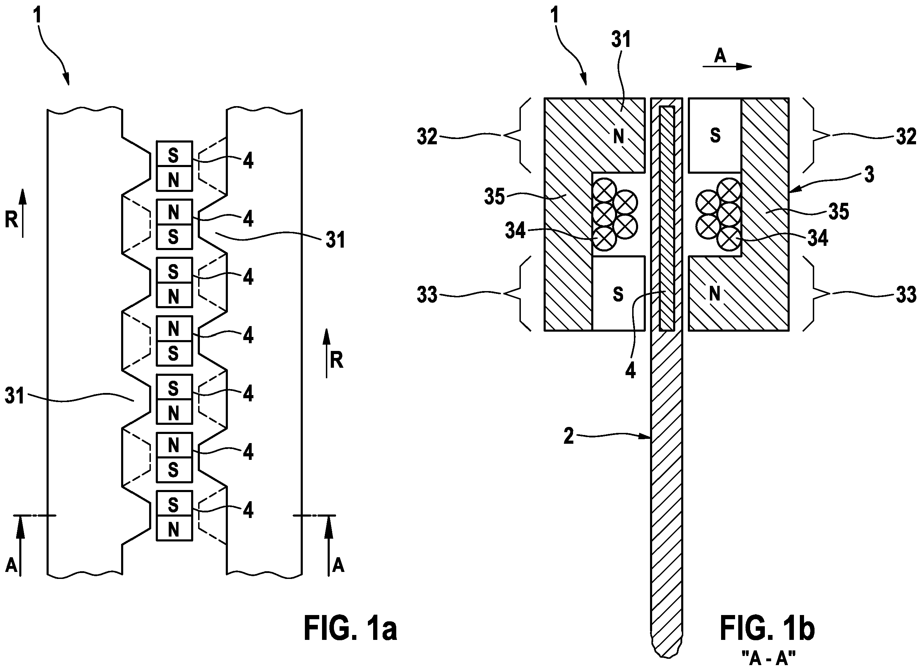

Die Figuren 1a und 1b zeigen Querschnittsdarstellungen einer Transversalflussmaschine 1 mit einem Scheibenrotor 2. Die Transversalflussmaschine 1 umfasst zwei Statoreinheiten 3, zwischen denen der Scheibenrotor 2 drehbeweglich um eine Drehachse angeordnet ist.

Der Scheibenrotor 2 ist aus einem magnetisch und elektrisch nicht leitenden Material ausgebildet, wie beispielsweise aus einem Kohlefaserverbundwerkstoff oder dergleichen, und enthält eingebettete Permanentmagnete 4. Die Permanentmagnete 4 sind in Umfangsrichtung R voneinander beabstandet angeordnet. Die Polarisierung der Permanentmagnete 4 ist in Umfangsrichtung R ausgerichtet, wobei die Polarisierungen von jeweils zwei benachbarten der Permanentmagnete 4 zueinander entgegengesetzt sind, so dass jeweils gleichartige Magnetpole einander gegenüberliegend angeordnet sind. Die einander gegenüberliegend angeordneten Magnetpole der Permanentmagnete 4 bilden ein resultierendes Magnetfeld aus, das sich von dem Bereich zwischen jeweils zwei Magnetpolen der Permanentmagnete 4 in radialer und axialer Richtung erstreckt.

Die Statoreinheiten 3 sind einander gegenüberliegend angeordnet, wobei der Scheibenrotor 2 frei drehbeweglich so zwischen den Statoreinheiten 3 angeordnet ist, dass die durch die Permanentmagnete 4 ausgebildeten Rotorpole zwischen Statorzähnen 31 der Statoreinheiten 3 verlaufen. Die Statorzähne 31 sind an einem Statorkörper 35 aus magnetisch leitfähigem Material angebracht bzw. einstückig mit diesem ausgebildet. Die Statorzähne 31 sind jeweils von dem Statorkörper 35 hervorstehend, d. h. als Vorsprünge, ausgebildet. Jede der Statoreinheiten 3 weist jeweils eine sich in Umfangsrichtung R erstreckende (radial) innere Reihe 33 und eine (radial) äußere Reihe 32 von Statorzähnen 31 auf. Zwischen den inneren Reihen 33 und den äußeren Reihen 32 von Statorzähnen 31 jeder der Statoreinheiten 3 ist eine Statorwicklung 34 vorgesehen, die konzentrisch um die Drehachse des Scheibenrotors 2 angeordnet ist.

Wie in Figur 1a dargestellt ist, sind die Statorzähne 31 der äußeren Statorzahnreihe 32 und die Statorzähne 31 der inneren Statorzahnreihe 33 jeder der Statoreinheiten 3 in Umfangsrichtung R mit jeweils dem gleichen Abstand voneinander angeordnet. Weiterhin sind die Statorzähne 31 der äußeren Statorzahnreihen 32 der beiden Statoreinheiten 3 und die Statorzähne 31 der inneren Statorzahnreihen 33 der Statoreinheiten 3 zueinander in Umfangsrichtung R versetzt angeordnet. Dadurch ergibt sich bezüglich jeder Statoreinheit 3 bei einer Bestromung der jeweiligen Statorwicklung 34 eine erste magnetische Polarisierung der Statorzähne 31 der äußeren Statorzahnreihe 32 und eine zweite magnetische Polarisierung der inneren Statorzahnreihe 33 der Statorzähne 31. Man erkennt, dass für die einander gegenüberliegenden Statoreinheiten 3 jedem der Statorzähne 31 eine entsprechende Vertiefung zwischen zwei benachbarten Statorzähnen 31 der jeweils in axialer Richtung A gegenüberliegenden Statoreinheit 3 gegenüberliegt.

Die Feldlinien im Luftspalt, die sich aus der Überlagerung der von den Permanentmagneten 4 im Scheibenrotor 2 und von den Statorwicklungen 34 in den Statoreinheiten 3 erzeugten Magnetfelder ergeben und die die Bildung des Motormoments verursachen, verlaufen im Wesentlichen in axialer bzw. leicht geneigt zur axialen Richtung A, also quer zur Magnetisierungsrichtung der Permanentmagnete 4.

Die Bestromungen der Statorwicklungen 34 der gegenüberliegenden Statoreinheiten 3 sind stets zueinander entgegengesetzt vorgesehen. Da in Umfangsrichtung R stets ein Statorzahn 31 der inneren Statorzahnreihe 33 und ein Statorzahn 31 der äußeren Statorzahnreihe 32 wechselweise angeordnet sind, kommt es in der Umfangsrichtung R zu einer abwechselnden Aneinanderreihung von magnetischen Nord- und Südpolen. Die durch die Permanentmagnete 4 des Scheibenrotors 2 ausgebildeten Magnetpole werden nun in Umfangsrichtung R zu dem am nächsten gelegenen magnetischen Pol der Statorzähne 31 gezogen, der eine jeweils entgegengesetzte Polarisierung aufweist. Somit kann ein von der Rotorposition und von dem Vorzeichen und Betrag des Stroms durch die Statorwicklungen 34 abhängiges Drehmoment erzeugt werden.

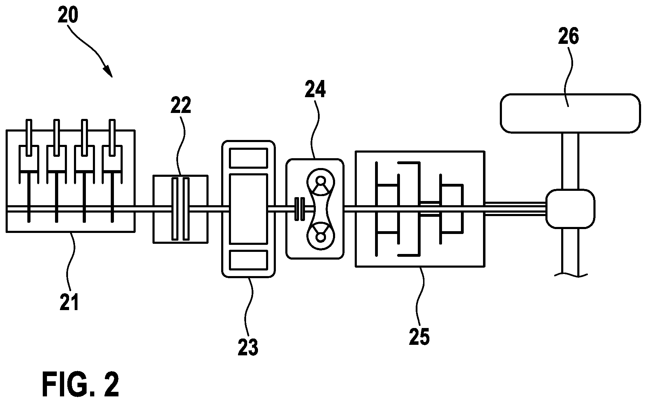

In Figur 2 ist ein herkömmliches Antriebssystem 20 für ein Hybridfahrzeug dargestellt. Das Antriebssystem 20 umfasst einen Verbrennungsmotor 21, der über eine erste Kupplung 22 mit einer Antriebseinheit 23 mit einer elektrischen Maschine 1 als Antriebsmotor gekoppelt ist. Ausgangsseitig der Antriebseinheit 23 ist eine zweite Kupplung 24 angeordnet, die einen Drehmomentwandler enthalten kann. Die zweite Kupplung 24 ist abtriebsseitig mit einem Schaltgetriebe 25 gekoppelt, das den Radantrieb für ein Antriebsrad 26 zur Verfügung stellt.

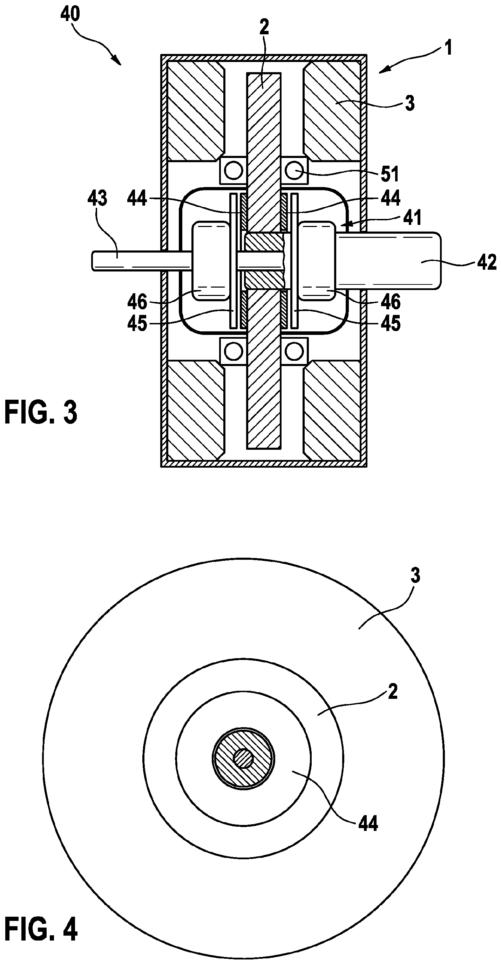

Figur 3 zeigt eine Längsschnittdarstellung einer Antriebseinheit 40 mit einer Transversalflussmaschine 1 und einer integrierten Kupplung 41, die die Funktion der ersten Kupplung 22 des obigen Antriebssystems 20 wahrnimmt. Alternativ kann auch eine Axialflussmaschine 1 verwendet werden.

Die Antriebseinheit 40 umfasst eine wie in Verbindung mit Figur 1 beschriebene Transversalflussmaschine 1, wobei der Scheibenrotor 2 über Lager 51 gelagert und mit einer Abtriebswelle 42 fest gekoppelt ist, die als Hohlwelle für die Ankopplung des Schaltgetriebes 25 über die zweite Kupplung 24 vorgesehen ist.

Weiterhin ist eine Antriebswelle 43 eingangsseitig der Antriebseinheit 40 vorgesehen, über die der Verbrennungsmotor 21 angekoppelt werden kann. Die Antriebswelle 43 ragt in axialer Richtung in die Hohlwelle der Abtriebswelle 42 hinein.

Der Scheibenrotor 2 ist mit Kupplungsbelägen 44 versehen, die im Wesentlichen konzentrisch beidseitig des Scheibenrotors 2 angeordnet sind und von dem Scheibenrotor 2 hervorstehen. Alternativ, nicht Teil der beanspruchten Erfindung, können die Kupplungsbeläge 44 auch nur einseitig des Scheibenrotors 2 vorgesehen sein.

Weiterhin sind den Kupplungsbelägen 44 jeweils gegenüberliegend Kupplungsscheiben 45 radial im Inneren der Statoreinheiten 3 vorgesehen. Die Kupplungsscheiben 45 sind axial beweglich ausgebildet und drehfest mit der Abtriebswelle mit einer Kupplungsaktorik 46 gekoppelt. Durch Betreiben der Kupplungsaktorik 46 in geeigneter Weise werden die Kupplungsscheiben 45 in axialer Richtung aufeinander zu bewegt und auf die Kupplungsbeläge 44 auf dem Scheibenrotor 2 gepresst. Dadurch wird eine kraftschlüssige Verbindung zwischen der eingangsseitigen Antriebswelle 43, dem Scheibenrotor 2 und damit mit der Abtriebswelle 42 geschaffen.

In Figur 4 ist in einer Draufsicht auf die Antriebseinheit 40 die Anordnung des Kupplungsbelags 44 konzentrisch zur Abtriebswelle 42 bzw. Antriebswelle 43 dargestellt. Die Kupplungsbeläge 44 können in beliebiger mechanischer Form mit dem Scheibenrotor 2 verbunden werden. Alternativ können die Kupplungsbeläge 44 auch direkt einstückig mit dem Scheibenrotor 2 ausgebildet werden.

Die Kupplungsaktorik 46 kann sich einseitig oder beidseitig des Scheibenrotors 2 der Transversalflussmaschine 1 befinden. Die Dimensionierung der Kupplungsbeläge 44 erfolgt dabei in bekannter Weise in Abhängigkeit von dem maximal zu übertragenden Drehmoment.

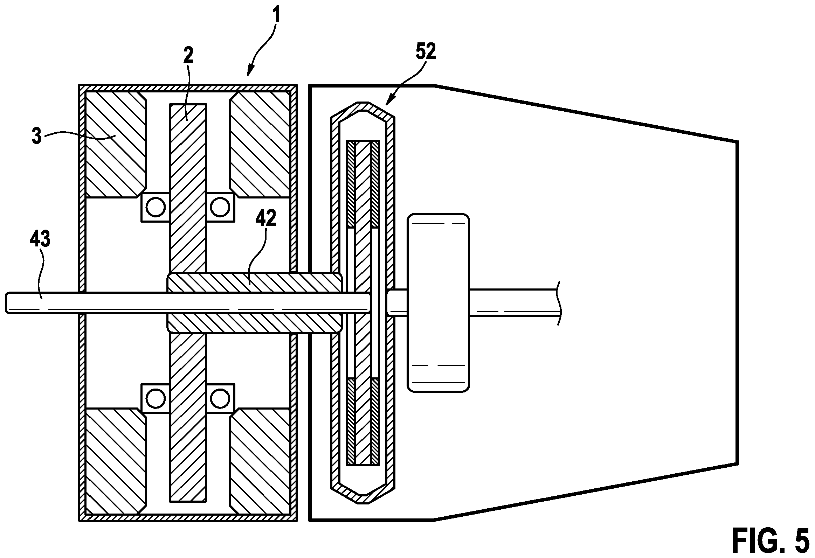

Eine nicht erfindungsgemäße weitere Möglichkeit, eine Transversalflussmaschine 1 mit einer Kupplung zu verbinden, ist in Figur 5 dargestellt. Dort ist gezeigt, dass die Antriebswelle 43, die vom Verbrennungsmotor 21 angetrieben wird, durch die Transversalflussmaschine 1 geführt wird, ohne mit dem Scheibenrotor 2 gekoppelt zu sein. Stattdessen ist abtriebsseitig der Scheibenrotor 2 mit einer die Antriebswelle 43 umgebenden

Abtriebswelle 42, die als Hohlwelle ausgeführt ist, gekoppelt. Antriebswelle 43 und Abtriebswelle 42 werden mit einer Kupplung 52 verbunden, die durch eine geeignete Kupplungsaktorik angesteuert wird. Die Kupplung kann in geeigneter Weise mit einer abtriebsseitig der Transversalflussmaschine 1 vorgesehenen Getriebeeinheit, insbesondere mit dem Schaltgetriebe 25, integriert vorgesehen sein.

## Patentansprüche

1. Antriebseinheit (40) für ein Hybridantriebssystem (20), umfassend:
- eine elektrische Maschine mit einer Statoreinheit (3) und einem Scheibenrotor (2);
- beidseitig konzentrisch an dem Scheibenrotor (2) angeordnete ringförmige Kupplungsbeläge (44);
- eine Kupplungsaktorik (46),
**dadurch gekennzeichnet, dass**
- die elektrische Maschine eine Transversal- oder Axialflussmaschine (1) ist,
- zwei Kupplungsscheiben (45), die den Kupplungsbelägen (44) des Scheibenrotors (2) gegenüberliegend angeordnet und im radial Inneren der Statoreinheit (3) vorgesehen sind;
- die zwei Kupplungsscheiben (45) axial beweglich ausgebildet sind, so dass die Kupplungsaktorik (46) die eine oder zwei Kupplungsscheiben (45) in Richtung der zugehörigen Kupplungsbeläge (44) bewegen kann, um eine kraftschlüssige Verbindung zwischen einer Antriebswelle (43) der Antriebseinheit (40), dem Scheibenrotor (2) und einer Abtriebswelle (42) der Antriebseinheit (40) zu schaffen.

2. Antriebseinheit (40) nach Anspruch 1, wobei der Scheibenrotor (2) fest mit einer Abtriebswelle (42) gekoppelt ist, die als Hohlwelle ausgeführt ist.

3. Antriebseinheit (40) nach Anspruch 1 oder 2, wobei der eine oder die beiden Kupplungsbeläge (44) auf den Scheibenrotor (2) aufgebracht oder in integrierter Weise mit diesem ausgebildet sind.

4. Antriebseinheit (40) nach einem der Ansprüche 1 bis 3, wobei mindestens eine der Kupplungsscheiben (45) mit einer Antriebswelle gekoppelt ist.

5. Antriebseinheit (40) nach einem der Ansprüche 1 bis 4, wobei der Scheibenrotor (2) drehbeweglich bezüglich der Antriebswelle (43) angeordnet ist.

6. Antriebseinheit (40) nach einem der Ansprüche 1 bis 5, wobei der Scheibenrotor (2) drehbeweglich gelagert ist, wobei die Lager (51) radial außerhalb der einen oder der beiden Kupplungsscheiben (45) angeordnet sind.

7. Hybridantriebssystem (20), insbesondere P2-Hybridantriebssystem, umfassend:
- einen Verbrennungsmotor (21); und
- eine Antriebseinheit (40) nach einem der Ansprüche 1 bis 6;
wobei der Verbrennungsmotor (21) zum Übertragen eines Drehmoments mit einer der Kupplungsscheiben (45) gekoppelt ist.

## Claims

1. Drive unit (40) for a hybrid drive system (20), comprising:
- an electrical machine with a stator unit (3) and a disc rotor (2);
- annular clutch linings (44) which are arranged concentrically on both sides of the disc rotor (2);
- a clutch actuator system (46),
**characterized in that**
- the electrical machine is a transversal or axial flux machine (1),
- two clutch discs (45) which are arranged opposite the clutch linings (44) of the disc rotor (2) and are provided radially on the inside of the stator unit (3);
- the two clutch discs (45) are designed in an axially movable manner, so that the clutch actuator system (46) can move the one or two clutch discs (45) in the direction of the associated clutch linings (44) in order to create a force-fitting connection between a drive shaft (43) of the drive unit (40), the disc rotor (2) and an output shaft (42) of the drive unit (40).

2. Drive unit (40) according to Claim 1, wherein the disc rotor (2) is fixedly coupled to an output shaft (42) which is embodied as a hollow shaft.

3. Drive unit (40) according to Claim 1 or 2, wherein the one or the two clutch linings (44) are applied to the disc rotor (2) or are designed in an integrated manner with the said disc rotor.

4. Drive unit (40) according to one of Claims 1 to 3, wherein at least one of the clutch discs (45) is coupled to a drive shaft.

5. Drive unit (40) according to one of Claims 1 to 4, wherein the disc rotor (2) is arranged in a rotationally moveable manner with respect to the drive shaft (43).

6. Drive unit (40) according to one of Claims 1 to 5, wherein the disc rotor (2) is mounted in a rotationally moveable manner, wherein the bearings (51) are arranged radially outside the one or the two clutch discs (45).

7. Hybrid drive system (20), in particular P2 hybrid drive system, comprising:
- an internal combustion engine (21); and
- a drive unit (40) according to one of Claims 1 to 6;
wherein the internal combustion engine (21) is coupled to one of the clutch discs (45) for the purpose of transmitting a torque.

## Revendications

1. Unité d'entraînement (40) pour un système d'entraînement hybride (20), comprenant:
- une machine électrique avec une unité de stator (3) et un rotor à disque (2);
- des garnitures d'embrayage annulaires (44) disposées de part et d'autre concentriquement sur le rotor à disque (2);
- un actionneur d'embrayage (46),
**caractérisée en ce que**
- la machine électrique est une machine à flux transversal ou axial (1),
- elle comprend deux disques d'embrayage (45), qui sont disposés en face des garnitures d'embrayage (44) du rotor à disque (2) et qui sont prévus radialement à l'intérieur de l'unité de stator (3);
- les deux disques d'embrayage (45) sont axialement mobiles, de telle manière que l'actionneur d'embrayage (46) puisse déplacer un ou deux disque(s) d'embrayage (45) en direction des garnitures d'embrayage correspondantes (44), afin de procurer une liaison par adhérence entre un arbre d'entraînement (43) de l'unité d'entraînement (40), le rotor à disque (2) et un arbre de sortie (42) de l'unité d'entraînement (40).

2. Unité d'entraînement (40) selon la revendication 1, dans laquelle le rotor à disque (2) est couplé de façon fixe à un arbre de sortie (42), qui est formé par un arbre creux.

3. Unité d'entraînement (40) selon une revendication 1 ou 2, dans laquelle une ou les deux garniture(s) d'embrayage (44) est/sont appliquée(s) sur le rotor à disque (2) ou est/sont formées de façon intégrée avec celui-ci.

4. Unité d'entraînement (40) selon l'une quelconque des revendications 1 à 3, dans laquelle au moins un des disques d'embrayage (45) est couplé avec un arbre d'entraînement.

5. Unité d'entraînement (40) selon l'une quelconque des revendications 1 à 4, dans laquelle le rotor à disque (2) est disposé de façon mobile en rotation par rapport à l'arbre d'entraînement (43).

6. Unité d'entraînement (40) selon l'une quelconque des revendications 1 à 5, dans laquelle le rotor à disque (2) est supporté de façon mobile en rotation, dans laquelle les paliers (51) sont disposés radialement à l'extérieur d'un ou des deux disque(s) d'embrayage (45).

7. Système d'entraînement hybride (20), en particulier système d'entraînement hybride P2, comprenant:
- un moteur à combustion interne (21); et
- une unité d'entraînement (40) selon l'une quelconque des revendications 1 à 6;
dans lequel le moteur à combustion interne (21) est couplé à un des disques d'embrayage (45) pour la transmission d'un couple de rotation.
